# EUROPEAN PATENT APPLICATION

(11) **EP 4 568 351 A1**
(43) Date of publication of application: **11.06.2025**
(21) Application number: 23850423.7
(22) Date of filing: 02.08.2023
(51) Int. Cl.: H04W 40/22, H04W 76/14, H04W 8/00, H04W 92/18

(54) **MULTI-PATH MANAGEMENT METHOD**

(30) Priority: 04.08.2022 US 202263394982 P; 05.08.2022 US 202263395346 P
(71) Applicant: LG Electronics Inc., Yeongdeungpo-gu Seoul 07336 (KR)
(72) Inventor: KIM, Seokjung, Seoul 06772 (KR); KIM, Laeyoung, Seoul 06772 (KR); YOUN, Myungjune, Seoul 06772 (KR); BYUN, Daewook, Seoul 06772 (KR)
(74) Representative: Frenkel, Matthias Alexander
(86) International application number: PCT/KR2023/011326
(87) International publication number: WO 2024/029923

(57) **Abstract**

One disclosure of the present specification provides a method by which remote UE performs communication. The method comprises the steps of: receiving a discovery message from relay UE, the discovery message comprising information about a first base station serving the relay UE; determining, on the basis of the information about the first base station, whether the first base station and a second base station serving remote UE are the same; and selecting the relay UE for PC5 (device-to-device communication) connection, on the basis that the first base station and the second base station are the same.

## Description

### TECHNICAL FIELD

The present specification relates to mobile communications.

### BACKGROUND ART

3rd generation partnership project (3GPP) long-term evolution (LTE) is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Work has started in international telecommunication union (ITU) and 3GPP to develop requirements and specifications for new radio (NR) systems. 3GPP has to identify and develop the technology components needed for successfully standardizing the new RAT timely satisfying both the urgent market needs, and the more long-term requirements set forth by the ITU radio communication sector (ITU-R) international mobile telecommunications (IMT)-2020 process. Further, the NR should be able to use any spectrum band ranging at least up to 100 GHz that may be made available for wireless communications even in a more distant future.

The NR targets a single technical framework addressing all usage scenarios, requirements and deployment scenarios including enhanced mobile broadband (eMBB), massive machine-type-communications (mMTC), ultra-reliable and low latency communications (URLLC), etc. The NR shall be inherently forward compatible.

There is a discussion on Multi-path, which uses both the Indirect Path between the Remote UE and the Base Station through the relay of the relay UE, and the Direct Path between the Remote UE and the Base Station without the relay of the relay UE. For Multi-path, the Base Station that manages the serving cell of the remote UE and the Base Station that manages the serving cell of the relay UE must be the same.

### DISCLOSURE

### TECHNICAL PROBLEM

When a remote UE selects a relay UE, an operation that considers Multi-Path is required.

### TECHNICAL SOLUTION

The remote UE may select the relay UE by determining whether the base station serving the remote UE and the base station serving the relay UE are the same based on information received from the relay UE.

### BRIEF DESCRIPTION OF THE DRAWINGS

FIG. 1 shows an example of a communication system to which implementations of the present disclosure is applied.
FIG. 2 shows an example of wireless devices to which implementations of the present disclosure is applied.
FIG. 3 shows an example of UE to which implementations of the present disclosure is applied.
FIG. 4 is a block diagram of a next generation cellular network.
FIG. 5 shows the 5G ProSe UE-to-Network Relay Discovery procedure according to Model A.
FIG. 6 shows the 5G ProSe UE-to-Network Relay Discovery procedure according to Model B.
FIG. 7 illustrates a scenario in which the Direct Path and the Indirect Path are served to the UE via one and the same NG-RAN.
FIG. 8 shows a scenario where two different Indirect Paths are served to a UE through one identical NG-RAN.
FIG. 9 shows a scenario where Direct Path and Indirect Path are served to a UE through two different NG-RANs.
FIG. 10 shows a scenario where two different Indirect Paths are served to a UE through two different NG-RANs.
FIG. 11 shows the procedure of the remote UE according to disclosure of the present specification.
FIG. 12 shows the procedure of the relay UE according to disclosure of the present specification.

### MODE FOR INVENTION

The following techniques, apparatuses, and systems may be applied to a variety of wireless multiple access systems. Examples of the multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multicarrier frequency division multiple access (MC-FDMA) system. CDMA may be embodied through radio technology such as universal terrestrial radio access (UTRA) or CDMA2000. TDMA may be embodied through radio technology such as global system for mobile communications (GSM), general packet radio service (GPRS), or enhanced data rates for GSM evolution (EDGE). OFDMA may be embodied through radio technology such as institute of electrical and electronics engineers (IEEE) 802.11 (Wi-Fi), IEEE 802.16 (WiMAX), IEEE 802.20, or evolved UTRA (E-UTRA). UTRA is a part of a universal mobile telecommunications system (UMTS). 3rd generation partnership project (3GPP) long term evolution (LTE) is a part of evolved UMTS (E-UMTS) using E-UTRA. 3GPP LTE employs OFDMA in DL and SC-FDMA in UL. Evolution of 3GPP LTE includes LTE-A (advanced), LTE-A Pro, and/or 5G NR (new radio).

For convenience of description, implementations of the present disclosure are mainly described in regards to a 3GPP based wireless communication system. However, the technical features of the present disclosure are not limited thereto. For example, although the following detailed description is given based on a mobile communication system corresponding to a 3GPP based wireless communication system, aspects of the present disclosure that are not limited to 3GPP based wireless communication system are applicable to other mobile communication systems.

For terms and technologies which are not specifically described among the terms of and technologies employed in the present disclosure, the wireless communication standard documents published before the present disclosure may be referenced.

In the present disclosure, "A or B" may mean "only A", "only B", or "both A and B". In other words, "A or B" in the present disclosure may be interpreted as "A and/or B". For example, "A, B or C" in the present disclosure may mean "only A", "only B", "only C", or "any combination of A, B and C".

In the present disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B" or "both A and B". In addition, the expression "at least one of A or B" or "at least one of A and/or B" in the present disclosure may be interpreted as same as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

Also, parentheses used in the present disclosure may mean "for example". In detail, when it is shown as "control information (PDCCH)", "PDCCH" may be proposed as an example of "control information". In other words, "control information" in the present disclosure is not limited to "PDCCH", and "PDCCH" may be proposed as an example of "control information". In addition, even when shown as "control information (i.e., PDCCH)", "PDCCH" may be proposed as an example of "control information".

Technical features that are separately described in one drawing in the present disclosure may be implemented separately or simultaneously.

Although not limited thereto, various descriptions, functions, procedures, suggestions, methods and/or operational flowcharts of the present disclosure disclosed herein can be applied to various fields requiring wireless communication and/or connection (e.g., 5G) between devices.

Hereinafter, the present disclosure will be described in more detail with reference to drawings. The same reference numerals in the following drawings and/or descriptions may refer to the same and/or corresponding hardware blocks, software blocks, and/or functional blocks unless otherwise indicated.

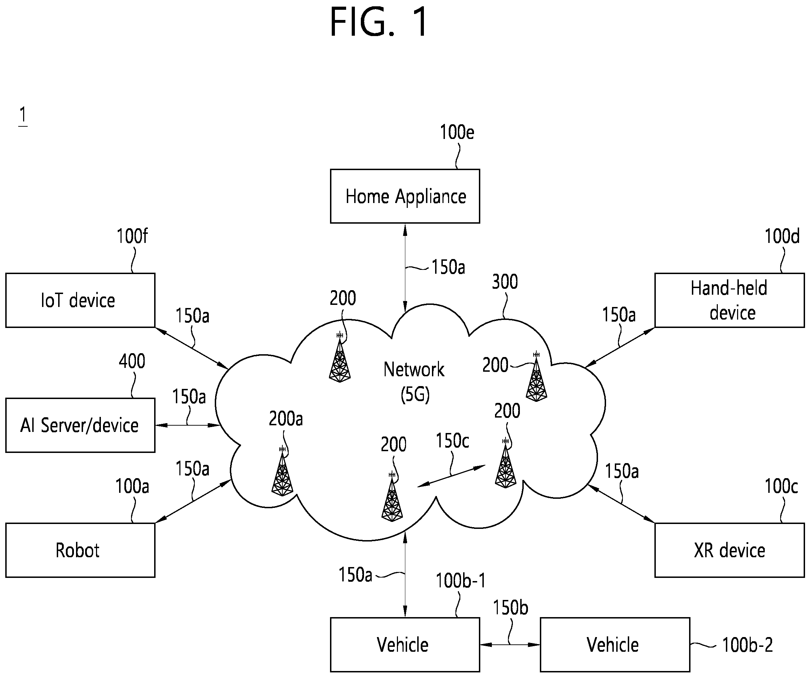

**FIG. 1** **shows an example of a communication system to which implementations of the present disclosure is applied.**

The 5G usage scenarios shown in FIG. 1 are only exemplary, and the technical features of the present disclosure can be applied to other 5G usage scenarios which are not shown in FIG. 1.

Three main requirement categories for 5G include (1) a category of enhanced mobile broadband (eMBB), (2) a category of massive machine type communication (mMTC), and (3) a category of ultra-reliable and low latency communications (URLLC).

Referring to FIG. 1, the communication system 1 includes wireless devices 100a to 100f, base stations (BSs) 200, and a network 300. Although FIG. 1 illustrates a 5G network as an example of the network of the communication system 1, the implementations of the present disclosure are not limited to the 5G system, and can be applied to the future communication system beyond the 5G system.

The BSs 200 and the network 300 may be implemented as wireless devices and a specific wireless device may operate as a BS/network node with respect to other wireless devices.

The wireless devices 100a to 100f represent devices performing communication using radio access technology (RAT) (e.g., 5G new RAT (NR)) or LTE) and may be referred to as communication/radio/5G devices. The wireless devices 100a to 100f may include, without being limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of performing communication between vehicles. The vehicles may include an unmanned aerial vehicle (UAV) (e.g., a drone). The XR device may include an AR/VR/Mixed Reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter.

In the present disclosure, the wireless devices 100a to 100f may be called user equipments (UEs). A UE may include, for example, a cellular phone, a smartphone, a laptop computer, a digital broadcast terminal, a personal digital assistant (PDA), a portable multimedia player (PMP), a navigation system, a slate personal computer (PC), a tablet PC, an ultrabook, a vehicle, a vehicle having an autonomous traveling function, a connected car, an UAV, an AI module, a robot, an AR device, a VR device, an MR device, a hologram device, a public safety device, an MTC device, an IoT device, a medical device, a FinTech device (or a financial device), a security device, a weather/environment device, a device related to a 5G service, or a device related to a fourth industrial revolution field.

The UAV may be, for example, an aircraft aviated by a wireless control signal without a human being onboard.

The VR device may include, for example, a device for implementing an object or a background of the virtual world. The AR device may include, for example, a device implemented by connecting an object or a background of the virtual world to an object or a background of the real world. The MR device may include, for example, a device implemented by merging an object or a background of the virtual world into an object or a background of the real world. The hologram device may include, for example, a device for implementing a stereoscopic image of 360 degrees by recording and reproducing stereoscopic information, using an interference phenomenon of light generated when two laser lights called holography meet.

The public safety device may include, for example, an image relay device or an image device that is wearable on the body of a user.

The MTC device and the IoT device may be, for example, devices that do not require direct human intervention or manipulation. For example, the MTC device and the IoT device may include smartmeters, vending machines, thermometers, smartbulbs, door locks, or various sensors.

The medical device may be, for example, a device used for the purpose of diagnosing, treating, relieving, curing, or preventing disease. For example, the medical device may be a device used for the purpose of diagnosing, treating, relieving, or correcting injury or impairment. For example, the medical device may be a device used for the purpose of inspecting, replacing, or modifying a structure or a function. For example, the medical device may be a device used for the purpose of adjusting pregnancy. For example, the medical device may include a device for treatment, a device for operation, a device for (in vitro) diagnosis, a hearing aid, or a device for procedure.

The security device may be, for example, a device installed to prevent a danger that may arise and to maintain safety. For example, the security device may be a camera, a closed-circuit TV (CCTV), a recorder, or a black box.

The FinTech device may be, for example, a device capable of providing a financial service such as mobile payment. For example, the FinTech device may include a payment device or a point of sales (POS) system.

The weather/environment device may include, for example, a device for monitoring or predicting a weather/environment.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, a 5G (e.g., NR) network, and a beyond-5G network. Although the wireless devices 100a to 100f may communicate with each other through the BSs 200/network 300, the wireless devices 100a to 100f may perform direct communication (e.g., sidelink communication) with each other without passing through the BSs 200/network 300. For example, the vehicles 100b-1 and 100b-2 may perform direct communication (e.g., vehicle-to-vehicle (V2V)/vehicle-to-everything (V2X) communication). The IoT device (e.g., a sensor) may perform direct communication with other IoT devices (e.g., sensors) or other wireless devices 100a to 100f.

Wireless communication/connections 150a, 150b and 150c may be established between the wireless devices 100a to 100f and/or between wireless device 100a to 100f and BS 200 and/or between BSs 200. Herein, the wireless communication/connections may be established through various RATs (e.g., 5G NR) such as uplink/downlink communication 150a, sidelink communication (or device-to-device (D2D) communication) 150b, inter-base station communication 150c (e.g., relay, integrated access and backhaul (IAB)), etc. The wireless devices 100a to 100f and the BSs 200/the wireless devices 100a to 100f may transmit/receive radio signals to/from each other through the wireless communication/connections 150a, 150b and 150c. For example, the wireless communication/connections 150a, 150b and 150c may transmit/receive signals through various physical channels. To this end, at least a part of various configuration information configuring processes, various signal processing processes (e.g., channel encoding/decoding, modulation/demodulation, and resource mapping/de-mapping), and resource allocating processes, for transmitting/receiving radio signals, may be performed based on the various proposals of the present disclosure.

AI refers to the field of studying artificial intelligence or the methodology that can create it, and machine learning refers to the field of defining various problems addressed in the field of AI and the field of methodology to solve them. Machine learning is also defined as an algorithm that increases the performance of a task through steady experience on a task.

Robot means a machine that automatically processes or operates a given task by its own ability. In particular, robots with the ability to recognize the environment and make self-determination to perform actions can be called intelligent robots. Robots can be classified as industrial, medical, home, military, etc., depending on the purpose or area of use. The robot can perform a variety of physical operations, such as moving the robot joints with actuators or motors. The movable robot also includes wheels, brakes, propellers, etc., on the drive, allowing it to drive on the ground or fly in the air.

Autonomous driving means a technology that drives on its own, and autonomous vehicles mean vehicles that drive without user's control or with minimal user's control. For example, autonomous driving may include maintaining lanes in motion, automatically adjusting speed such as adaptive cruise control, automatic driving along a set route, and automatically setting a route when a destination is set. The vehicle covers vehicles equipped with internal combustion engines, hybrid vehicles equipped with internal combustion engines and electric motors, and electric vehicles equipped with electric motors, and may include trains, motorcycles, etc., as well as cars. Autonomous vehicles can be seen as robots with autonomous driving functions.

Extended reality is collectively referred to as VR, AR, and MR. VR technology provides objects and backgrounds of real world only through computer graphic (CG) images. AR technology provides a virtual CG image on top of a real object image. MR technology is a CG technology that combines and combines virtual objects into the real world. MR technology is similar to AR technology in that they show real and virtual objects together. However, there is a difference in that in AR technology, virtual objects are used as complementary forms to real objects, while in MR technology, virtual objects and real objects are used as equal personalities.

NR supports multiples numerologies (and/or multiple subcarrier spacings (SCS)) to support various 5G services. For example, if SCS is 15 kHz, wide area can be supported in traditional cellular bands, and if SCS is 30 kHz/60 kHz, dense-urban, lower latency, and wider carrier bandwidth can be supported. If SCS is 60 kHz or higher, bandwidths greater than 24.25 GHz can be supported to overcome phase noise.

The NR frequency band may be defined as two types of frequency range, i.e., FR1 and FR2. The numerical value of the frequency range may be changed. For example, the frequency ranges of the two types (FR1 and FR2) may be as shown in Table 1 below. For ease of explanation, in the frequency ranges used in the NR system, FR1 may mean "sub 6 GHz range", FR2 may mean "above 6 GHz range," and may be referred to as millimeter wave (mmW).

**[Table 1]**

| Frequency Range designation | Corresponding frequency range | Subcarrier Spacing |
|---|---|---|
| FR1 | 450MHz - 6000MHz | 15, 30, 60kHz |
| FR2 | 24250MHz - 52600MHz | 60, 120, 240kHz |

As mentioned above, the numerical value of the frequency range of the NR system may be changed. For example, FR1 may include a frequency band of 410MHz to 7125MHz as shown in Table 2 below. That is, FR1 may include a frequency band of 6GHz (or 5850, 5900, 5925 MHz, etc.) or more. For example, a frequency band of 6 GHz (or 5850, 5900, 5925 MHz, etc.) or more included in FR1 may include an unlicensed band. Unlicensed bands may be used for a variety of purposes, for example for communication for vehicles (e.g., autonomous driving).

**[Table 2]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Here, the radio communication technologies implemented in the wireless devices in the present disclosure may include narrowband internet-of-things (NB-IoT) technology for low-power communication as well as LTE, NR and 6G. For example, NB-IoT technology may be an example of low power wide area network (LPWAN) technology, may be implemented in specifications such as LTE Cat NB1 and/or LTE Cat NB2, and may not be limited to the above-mentioned names. Additionally and/or alternatively, the radio communication technologies implemented in the wireless devices in the present disclosure may communicate based on LTE-M technology. For example, LTE-M technology may be an example of LPWAN technology and be called by various names such as enhanced machine type communication (eMTC). For example, LTE-M technology may be implemented in at least one of the various specifications, such as 1) LTE Cat 0, 2) LTE Cat M1, 3) LTE Cat M2, 4) LTE non-bandwidth limited (non-BL), 5) LTE-MTC, 6) LTE Machine Type Communication, and/or 7) LTE M, and may not be limited to the above-mentioned names. Additionally and/or alternatively, the radio communication technologies implemented in the wireless devices in the present disclosure may include at least one of ZigBee, Bluetooth, and/or LPWAN which take into account low-power communication, and may not be limited to the above-mentioned names. For example, ZigBee technology may generate personal area networks (PANs) associated with small/low-power digital communication based on various specifications such as IEEE 802.15.4 and may be called various names.

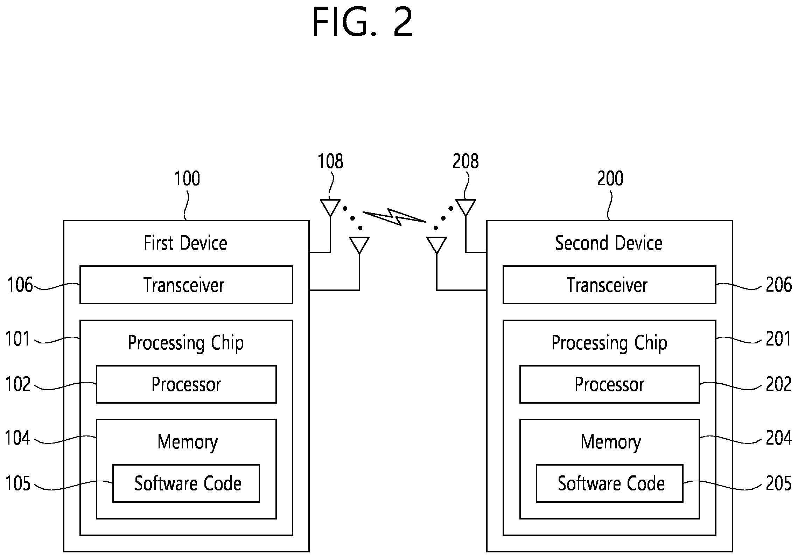

**FIG. 2** **shows an example of wireless devices to which implementations of the present disclosure is applied.**

In FIG. 2, The first wireless device 100 and/or the second wireless device 200 may be implemented in various forms according to use cases/services. For example, {the first wireless device 100 and the second wireless device 200} may correspond to at least one of {the wireless device 100a to 100f and the BS 200}, {the wireless device 100a to 100f and the wireless device 100a to 100f} and/or {the BS 200 and the BS 200} of FIG. 1. The first wireless device 100 and/or the second wireless device 200 may be configured by various elements, devices/parts, and/or modules.

The first wireless device 100 may include at least one transceiver, such as a transceiver 106, at least one processing chip, such as a processing chip 101, and/or one or more antennas 108.

The processing chip 101 may include at least one processor, such a processor 102, and at least one memory, such as a memory 104. Additional and/or alternatively, the memory 104 may be placed outside of the processing chip 101.

The processor 102 may control the memory 104 and/or the transceiver 106 and may be adapted to implement the descriptions, functions, procedures, suggestions, methods and/or operational flowcharts described in the present disclosure. For example, the processor 102 may process information within the memory 104 to generate first information/signals and then transmit radio signals including the first information/signals through the transceiver 106. The processor 102 may receive radio signals including second information/signals through the transceiver 106 and then store information obtained by processing the second information/signals in the memory 104.

The memory 104 may be operably connectable to the processor 102. The memory 104 may store various types of information and/or instructions. The memory 104 may store a firmware and/or a software code 105 which implements codes, commands, and/or a set of commands that, when executed by the processor 102, perform the descriptions, functions, procedures, suggestions, methods and/or operational flowcharts disclosed in the present disclosure. For example, the firmware and/or the software code 105 may implement instructions that, when executed by the processor 102, perform the descriptions, functions, procedures, suggestions, methods and/or operational flowcharts disclosed in the present disclosure. For example, the firmware and/or the software code 105 may control the processor 102 to perform one or more protocols. For example, the firmware and/or the software code 105 may control the processor 102 to perform one or more layers of the radio interface protocol.

Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. Each of the transceiver 106 may include a transmitter and/or a receiver. The transceiver 106 may be interchangeably used with Radio Frequency (RF) unit(s). In the present disclosure, the first wireless device 100 may represent a communication modem/circuit/chip.

The second wireless device 200 may include at least one transceiver, such as a transceiver 206, at least one processing chip, such as a processing chip 201, and/or one or more antennas 208.

The processing chip 201 may include at least one processor, such a processor 202, and at least one memory, such as a memory 204. Additional and/or alternatively, the memory 204 may be placed outside of the processing chip 201.

The processor 202 may control the memory 204 and/or the transceiver 206 and may be adapted to implement the descriptions, functions, procedures, suggestions, methods and/or operational flowcharts described in the present disclosure. For example, the processor 202 may process information within the memory 204 to generate third information/signals and then transmit radio signals including the third information/signals through the transceiver 206. The processor 202 may receive radio signals including fourth information/signals through the transceiver 106 and then store information obtained by processing the fourth information/signals in the memory 204.

The memory 204 may be operably connectable to the processor 202. The memory 204 may store various types of information and/or instructions. The memory 204 may store a firmware and/or a software code 205 which implements codes, commands, and/or a set of commands that, when executed by the processor 202, perform the descriptions, functions, procedures, suggestions, methods and/or operational flowcharts disclosed in the present disclosure. For example, the firmware and/or the software code 205 may implement instructions that, when executed by the processor 202, perform the descriptions, functions, procedures, suggestions, methods and/or operational flowcharts disclosed in the present disclosure. For example, the firmware and/or the software code 205 may control the processor 202 to perform one or more protocols. For example, the firmware and/or the software code 205 may control the processor 202 to perform one or more layers of the radio interface protocol.

Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. Each of the transceiver 206 may include a transmitter and/or a receiver. The transceiver 206 may be interchangeably used with RF unit. In the present disclosure, the second wireless device 200 may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as Physical (PHY) layer, Media Access Control (MAC) layer, Radio Link Control (RLC) layer, Packet Data Convergence Protocol (PDCP) layer, Radio Resource Control (RRC) layer, and Service Data Adaptation Protocol (SDAP) layer). The one or more processors 102 and 202 may generate one or more Protocol Data Units (PDUs), one or more Service Data Unit (SDUs), messages, control information, data, or information according to the descriptions, functions, procedures, suggestions, methods and/or operational flowcharts disclosed in the present disclosure. The one or more processors 102 and 202 may generate signals (e.g., baseband signals) including PDUs, SDUs, messages, control information, data, or information according to the descriptions, functions, procedures, suggestions, methods and/or operational flowcharts disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, suggestions, methods and/or operational flowcharts disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. For example, the one or more processors 102 and 202 may be configured by a set of a communication control processor, an Application Processor (AP), an Electronic Control Unit (ECU), a Central Processing Unit (CPU), a Graphic Processing Unit (GPU), and a memory control processor.

The one or more memories 104, 204 may be associated with the one or more processors 102, 202 and may store various forms of data, signals, messages, information, programs, codes, instructions, and/or commands. The one or more memories 104, 204 may comprise random access memory (RAM), dynamic RAM (DRAM), read-only memory (ROM), erasable programmable ROM (EPROM), flash memory, volatile memory, non-volatile memory, hard drives, registers, cache memory, computer-readable storage media, and/or combinations thereof. The one or more memories 104, 204 may be located inside and/or outside of the one or more processors 102, 202. Further, the one or more memories 104, 204 may be coupled to the one or more processors 102, 202 via various technologies, such as wired or wireless connections.

The one or more transceivers 106, 206 may transmit user data, control information, wireless signals/channels, etc. referred to in the descriptions, features, procedures, suggestions, methods, and/or flowcharts of operation disclosed herein to one or more other devices. The one or more transceivers 106, 206 may receive user data, control information, wireless signals/channels, etc. referred to in the descriptions, features, procedures, suggestions, methods, and/or flowcharts of operation disclosed herein from one or more other devices. For example, the one or more transceivers 106, 206 may be associated with the one or more processors 102, 202 and may transmit and receive wireless signals. For example, the one or more processors 102, 202 may control the one or more transceivers 106, 206 to transmit user data, control information, wireless signals, etc. to one or more other devices. Further, the one or more processors 102, 202 may control the one or more transceivers 106, 206 to receive user data, control information, wireless signals, etc. from the one or more other devices.

The one or more transceivers 106, 206 may be associated with one or more antennas 108, 208. Additionally and/or alternatively, the one or more transceivers 106, 206 may include one or more antennas 108, 208. The one or more transceivers 106, 206 may be configured to transmit and receive, via the one or more antennas 108, 208, user data, control information, wireless signals/channels, etc. referred to in the descriptions, features, procedures, suggestions, methods, and/or flowcharts of operation disclosed herein. As used herein, the one or more antennas 108, 208 may be a plurality of physical antennas, or a plurality of logical antennas (e.g., antenna ports).

The one or more transceivers 106, 206 may convert the received user data, control information, radio signals/channels, etc. from RF band signals to baseband signals in order to process the received user data, control information, radio signals/channels, etc. using the one or more processors 102, 202. The one or more transceivers 106, 206 may convert the processed user data, control information, radio signals/channels, etc. from baseband signals to RF band signals using the one or more processors 102, 202. To do so, the one or more transceivers 106, 206 may include (analog) oscillators and/or filters. For example, the one or more transceivers 106, 206 may up-convert an OFDM baseband signal to an OFDM signal via an (analog) oscillator and/or filter under the control of the one or more processors 102, 202, and transmit the up-converted OFDM signal at the carrier frequency. The one or more transceivers 106, 206 may receive the OFDM signal at the carrier frequency and, under the control of the one or more processors 102, 202, down-convert the OFDM signal to an OFDM baseband signal via an (analog) oscillator and/or filter.

Although not shown in FIG. 2, the wireless devices 100 and 200 may further include additional components. The additional components 140 may be variously configured according to types of the wireless devices 100 and 200. For example, the additional components 140 may include at least one of a power unit/battery, an Input/Output (I/O) device (e.g., audio I/O port, video I/O port), a driving device, and a computing device. The additional components 140 may be coupled to the one or more processors 102 and 202 via various technologies, such as a wired or wireless connection.

In the implementations of the present disclosure, a UE may operate as a transmitting device in Uplink (UL) and as a receiving device in Downlink (DL). In the implementations of the present disclosure, a BS may operate as a receiving device in UL and as a transmitting device in DL. Hereinafter, for convenience of description, it is mainly assumed that the first wireless device 100 acts as the UE, and the second wireless device 200 acts as the BS. For example, the processor(s) 102 connected to, mounted on or launched in the first wireless device 100 may be adapted to perform the UE behavior according to an implementation of the present disclosure or control the transceiver(s) 106 to perform the UE behavior according to an implementation of the present disclosure. The processor(s) 202 connected to, mounted on or launched in the second wireless device 200 may be adapted to perform the BS behavior according to an implementation of the present disclosure or control the transceiver(s) 206 to perform the BS behavior according to an implementation of the present disclosure.

In the present disclosure, a BS is also referred to as a node B (NB), an eNode B (eNB), or a gNB.

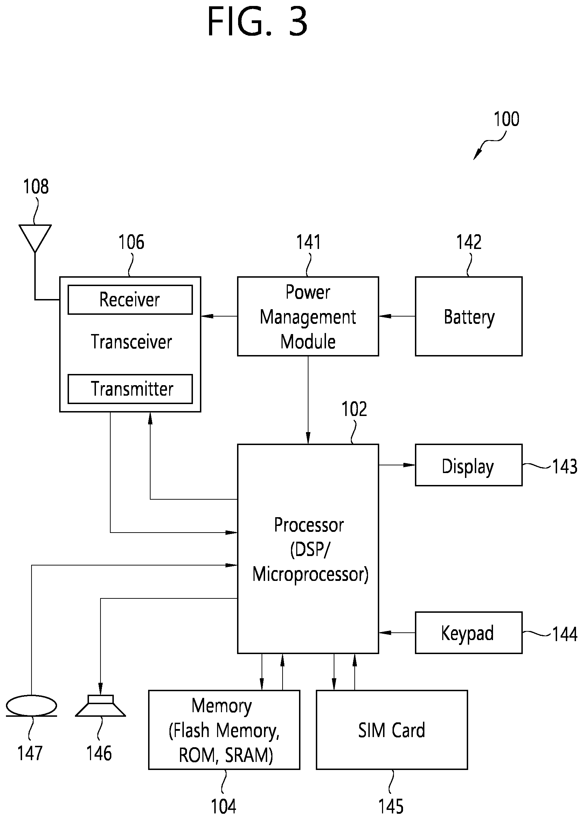

**FIG. 3** **shows an example of UE to which implementations of the present disclosure is applied.**

FIG. 3 shows an example of UE to which implementations of the present disclosure is applied.

Referring to FIG. 3, a UE 100 may correspond to the first wireless device 100 of FIG. 2.

A UE 100 includes a processor 102, a memory 104, a transceiver 106, one or more antennas 108, a power management module 141, a battery 142, a display 143, a keypad 144, a Subscriber Identification Module (SIM) card 145, a speaker 146, and a microphone 147.

The processor 102 may be adapted to implement the descriptions, functions, procedures, suggestions, methods and/or operational flowcharts disclosed in the present disclosure. The processor 102 may be adapted to control one or more other components of the UE 100 to implement the descriptions, functions, procedures, suggestions, methods and/or operational flowcharts disclosed in the present disclosure. Layers of the radio interface protocol may be implemented in the processor 102. The processor 102 may include ASIC, other chipset, logic circuit and/or data processing device. The processor 102 may be an application processor. The processor 102 may include at least one of DSP, CPU, GPU, a modem (modulator and demodulator). An example of the processor 102 may be found in SNAPDRAGON^{™} series of processors made by Qualcomm^{®}, EXYNOS^{™} series of processors made by Samsung^{®}, A series of processors made by Apple^{®}, HELIO^{™} series of processors made by MediaTek^{®}, ATOM^{™} series of processors made by Intel^{®} or a corresponding next generation processor.

The memory 104 is operatively coupled with the processor 102 and stores a variety of information to operate the processor 102. The memory 104 may include ROM, RAM, flash memory, memory card, storage medium and/or other storage device. When the embodiments are implemented in software, the techniques described herein can be implemented with modules (e.g., procedures, functions, etc.) that perform the descriptions, functions, procedures, suggestions, methods and/or operational flowcharts disclosed in the present disclosure. The modules can be stored in the memory 104 and executed by the processor 102. The memory 104 can be implemented within the processor 102 or external to the processor 102 in which case those can be communicatively coupled to the processor 102 via various means as is known in the art.

The transceiver 106 is operatively coupled with the processor 102, and transmits and/or receives a radio signal. The transceiver 106 includes a transmitter and a receiver. The transceiver 106 may include baseband circuitry to process radio frequency signals. The transceiver 106 controls the one or more antennas 108 to transmit and/or receive a radio signal.

The power management module 141 manages power for the processor 102 and/or the transceiver 106. The battery 142 supplies power to the power management module 141.

The display 143 outputs results processed by the processor 102. The keypad 144 receives inputs to be used by the processor 102. The keypad 144 may be shown on the display 143.

The SIM card 145 is an integrated circuit that is intended to securely store the International Mobile Subscriber Identity (IMSI) number and its related key, which are used to identify and authenticate subscribers on mobile telephony devices (such as mobile phones and computers). It is also possible to store contact information on many SIM cards.

The speaker 146 outputs sound-related results processed by the processor 102. The microphone 147 receives sound-related inputs to be used by the processor 102.

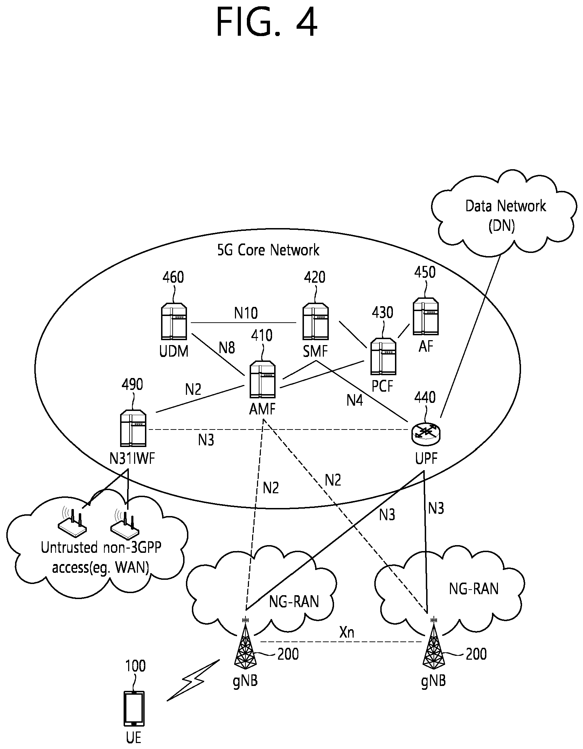

**FIG. 4** **is a block diagram of a next generation cellular network.**

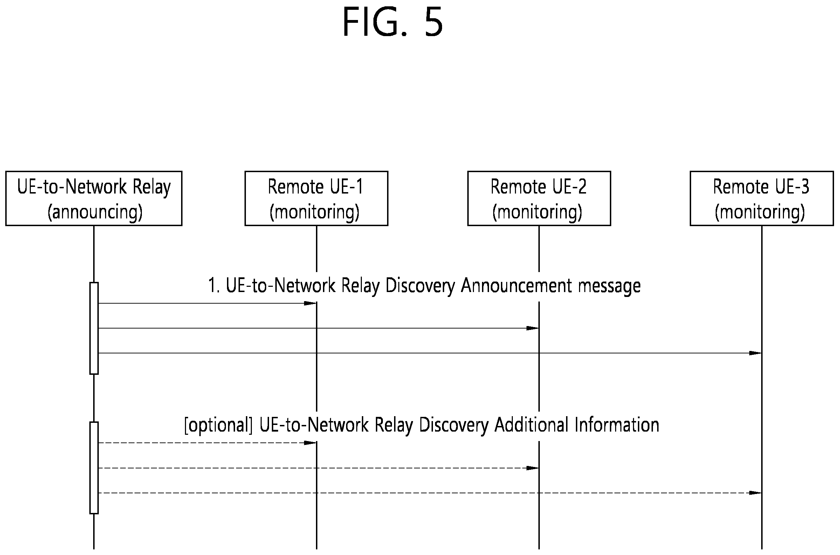

The 5G Core (5GC) may include a variety of components, some of which are shown in FIG. 5, such as the Access and Mobility Management Function (AMF) (410), the Session Management Function (SMF) (420), the Policy Control Function (PCF) (430), the User Plane Function (UPF) (440), the Application Function (AF) (450), the UDF (UDF) (450), and the UDF (UDF) (450): Policy Control Function (PCF) (430), User Plane Function (UPF) (440), Application Function (AF) (450), Unified Data Management (UDM) (460), and Non-3rd Generation Partnership Project (3GPP) Inter Working Function (N3IWF) (490).

The UE 100 is connected to the data network via the UPF 440 through a next generation radio access network (NG-RAN) including the gNB 20.

The UE 100 may also be provided data services via untrusted non-3GPP access, such as a wireless local area network (WLAN). To connect said non-3GPP access to the core network, a N3IWF 490 may be deployed.

The illustrated N3IWF 490 performs the function of managing the interworking between the non-3GPP access and the 5G system. When the UE 100 is associated with a non-3GPP access (e.g., WiFi, also referred to as IEEE 801.11), the UE 100 may be associated with the 5G system via the N3IWF 490. The N3IWF 490 communicates with the AMF 410 for control signaling and with the UPF 440 via the N3 interface for data transfer.

The illustrated AMF 410 may manage access and mobility in a 5G system. The AMF 410 may perform functions to manage Non-Access Stratum (NAS) security. The AMF 410 may perform functions to handle mobility in an idle state.

The UPF 440 shown is a type of gateway through which user data is transmitted and received. The UPF node 440 may perform all or part of the user plane functions of the Serving Gateway (S-GW) and Packet Data Network Gateway (P-GW) of fourth generation mobile communications.

The UPF 440 acts as a demarcation point between the next generation radio access network (NG-RAN) and the core network, and is the element that maintains the data path between the gNB 20 and the SMF 420. Additionally, the UPF 440 acts as a mobility anchor point when the UE 100 moves across the area served by the gNB 20. The UPF 440 may perform functions to handle PDUs. For mobility within the NG-RAN (Next Generation-Radio Access Network as defined in 3GPP Release-15 and later), the UPF may route packets. The UPF 440 may also function as an anchor point for mobility with other 3GPP networks (RANs defined prior to 3GPP Release-15, e.g., UTRAN, E-UTRAN (Evolved-UMTS (Universal Mobile Telecommunications System) Terrestrial Radio Access Network), or GERAN (Global System for Mobile Communication (GSM)/EDGE (Enhanced Data rates for Global Evolution) Radio Access Network). The UPF 440 may correspond to a termination point of the data interface to the data network.

The PCF 430 shown is a node that controls the operator's policies.

The AF 450 shown is a server for providing multiple services to the UE 100.

The UDM 460 shown is a type of server that manages subscriber information, such as a home subscriber server (HSS) in fourth generation mobile communications. The UDM 460 stores and manages subscriber information in a unified data repository (UDR).

The SMF 420 shown may perform the function of assigning an Internet Protocol (IP) address of a UE. The SMF 420 may also control protocol data unit (PDU) sessions.

As a point of reference, the drawing symbols for AMF 410, SMF 420, PCF 430, UPF 440, AF 450, UDM 460, N3IWF 490, gNB 20, or UE 100 may be omitted herein.

Fifth generation mobile communications supports multiple numerologies or subcarrier spacings (SCS) to support various 5G services. For example, an SCS of 15 kHz supports wide area coverage in traditional cellular bands; an SCS of 30 kHz/60 kHz supports dense-urban, lower latency, and wider carrier bandwidth; and an SCS of 60 kHz or higher supports bandwidths greater than 24.25 GHz to overcome phase noise.

### <5G ProSe UE-to-Network Relay Discovery>

5G ProSe UE-to-Network Relay Discovery is applicable to both 5G ProSe Layer-3 and Layer-2 5G ProSe UE-to-Network Relay Discovery for public safety use and commercial services. To perform 5G ProSe 5G ProSe UE-to-Network Relay Discovery, 5G ProSe remote UE and 5G ProSe UE-Network Relay are pre-configured or provisioned with relevant information.

In 5G ProSe UE-to-Network Relay Discovery, the UE uses the pre-configured or provisioned information for the relay discovery procedure.

RSC (Relay Service Code) is used in 5G ProSe UE-to-Network Relay Discovery and indicates the connection service that 5G ProSe UE-Network Relay provides to 5G ProSe remote UE. RSC is configured in 5G ProSe UE-Network Relay and 5G ProSe remote UE. 5G ProSe UE-Network Relay and 5G ProSe remote UE are aware of whether the RSC provides 5G ProSe Layer-2 or Layer-3 UE-Network Relay service. A 5G ProSe UE-Network Relay supporting multiple RSCs may use multiple discovery messages to inform the RSCs, using one RSC per discovery message.

Additional information not directly used for discovery may also be informed using the PC5-D protocol stack in a single or individual discovery message of type "Relay Discovery Additional Information".

### 1. Procedure according to Model A

**FIG. 5** **shows the 5G ProSe UE-to-Network Relay Discovery procedure according to Model A.**

Step 1. 5G ProSe UE-to-Network Relay transmits a UE-to-Network Relay Discovery Announcement message. The UE-to-Network Relay Discovery Announcement message includes Discovery Message Type, Announcer Info, and RSC, and is transmitted using Source Layer-2 ID and Destination Layer-2 ID.

For 5G ProSe Layer-3 UE-to-Network Relay, 5G ProSe Layer-3 UE-to-Network Relay shall include RSC in UE-to-Network Relay Discovery Announcement only if the S-NSSAI associated with the RSC belongs to the allowed NSSAI of UE-to-Network Relay.

5G ProSe remote UE (1 to 3) determines the Destination Layer-2 ID for signal reception. The Destination Layer-2 ID is set to UEs.

5G ProSe remote UE (1 to 3) monitors notification messages via 5G ProSe UE-to-Network RSC corresponding to the desired service.

Optionally, 5G ProSe UE-to-Network Relay may also transmit Relay Discovery Additional Information message.

5G ProSe remote UE selects 5G ProSe UE-to-Network Relay based on the information received in Step 1.

### 2. Procedure according to Model B

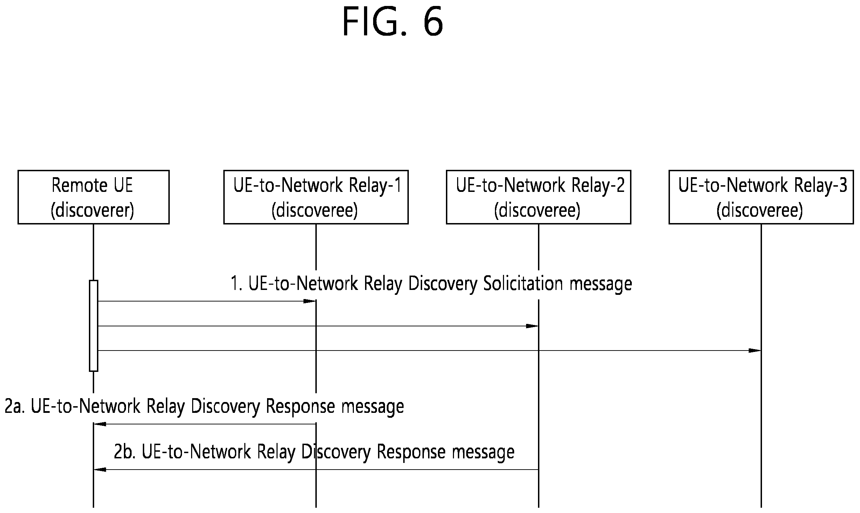

**FIG. 6** **shows the 5G ProSe UE-to-Network Relay Discovery procedure according to Model B.**

Step 1. 5G ProSe remote UE transmits 5G ProSe UE-to-Network Relay Discovery Solicitation message. 5G ProSe UE-to-Network Relay Discovery Solicitation message includes search message type, searcher information, RSC, and optionally target information, and is transmitted using Source Layer-2 ID and Destination Layer-2 ID. When a 5G ProSe remote UE discovers a 5G ProSe UE-to-Network Relay, it sends a request message containing an RSC associated with the desired connection service. The RSC is based on policies/parameters.

5G ProSe UE-to-Network Relays (1 to 3) may determine the Destination Layer-2 ID for signal reception. The Destination Layer-2 ID consists of UEs.

Step 2. The 5G ProSe UE-to-Network Relays (1 and 2) that match the RSC value included in the request message and the Target Info (if any) respond to the 5G ProSe Remote UE with a UE-to-Network Relay Discovery Response message. The 5G ProSe UE-to-Network Relay Discovery Response message contains the Type of Discovery Message, Discoveree Info, and RSC, and is transmitted using the Source Layer-2 ID and the Destination Layer-2 ID.

For 5G ProSe Layer-3 UE-to-Network Relay, 5G ProSe UE-to-Network Relay shall respond to the matching RSC of the UE-to-Network Relay Discovery Solicitation message only if the S-NSSAI associated with the RSC belongs to the Allowed NSSAI of the 5G ProSe UE-to-Network Relay.

The 5G ProSe Remote UE selects a 5G ProSe UE-to-Network Relay based on the information received in step 2.

The 5G ProSe UE-to-Network Relay is selected based on the information.

### <Problems to be solved in the disclosure of this specification>

A method to support ProSe (Proximity based Services) in 5GS has been discussed. A method to receive network connection services through UE-to-Network Relay has been discussed. The UE-to-Network Relay may be a Layer-2 UE-to-Network Relay or a Layer-3 UE-to-Network Relay. For details, see TS 23.304 V17.3.0.

The UE may receive connection services from the network in the following ways:
- Direct Path (Direct Network Communication): The UE receives services directly from the network without going through the UE-to-Network Relay.
- Indirect Path (Indirect Network Communication): The UE receives services indirectly from the network through the UE-to-Network Relay.

The following scenario was previously considered impossible:
- The UE receives network connection services through one or more Layer-2 UE-to-Network Relays and simultaneously receives network connection services through the direct path.
- The UE receives network connection services through two or more Layer-2 UE-to-Network Relays.

Even when the UE receives network connection services through the Layer-2 UE-to-Network Relay, it may perform RRC operations and NAS operations with the NG-RAN and the core network (via the Layer-2 UE-to-Network Relay). In the above scenario, the UE has multiple RRC connections and NAS connections via 3GPP access (e.g., Uu interface between UE and NG-RAN in case of direct path, and Uu interface between Layer-2 UE-to-Network Relay and NG-RAN in case of indirect path), which was not allowed in the past.

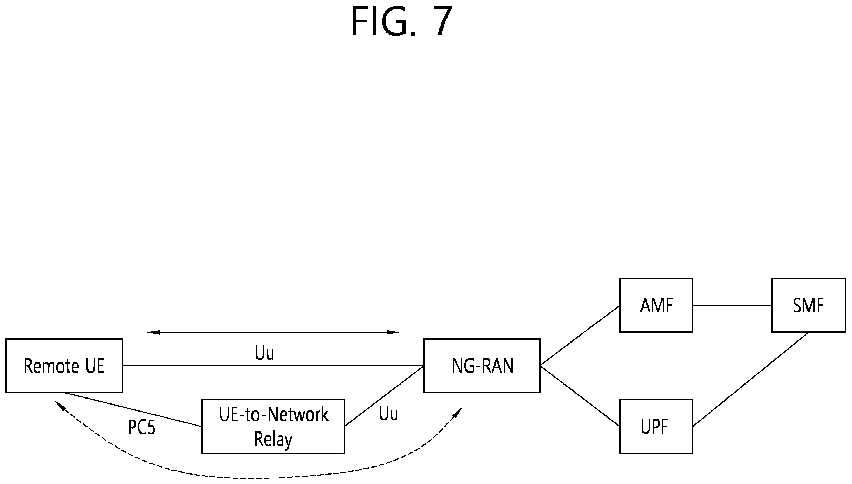

Scenarios in which the UE receives services from the network via multiple paths may be considered. FIGS. 7 to 10 illustrate scenarios in which the UE receives services from the network via two paths (Direct Path or Indirect Path).

**FIG. 7** **illustrates a scenario in which the Direct Path and the Indirect Path are served to the UE via one and the same NG-RAN.**

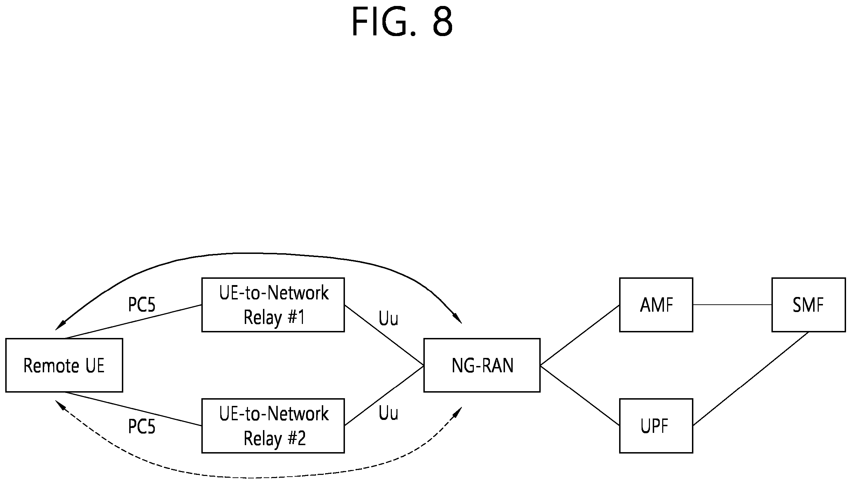

**FIG. 8** **shows a scenario where two different Indirect Paths are served to a UE through one identical NG-RAN.**

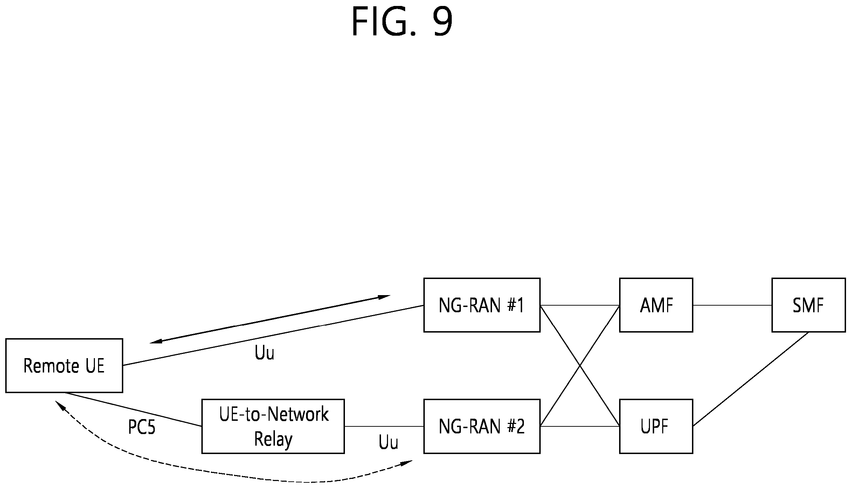

**FIG. 9** **shows a scenario where Direct Path and Indirect Path are served to a UE through two different NG-RANs.**

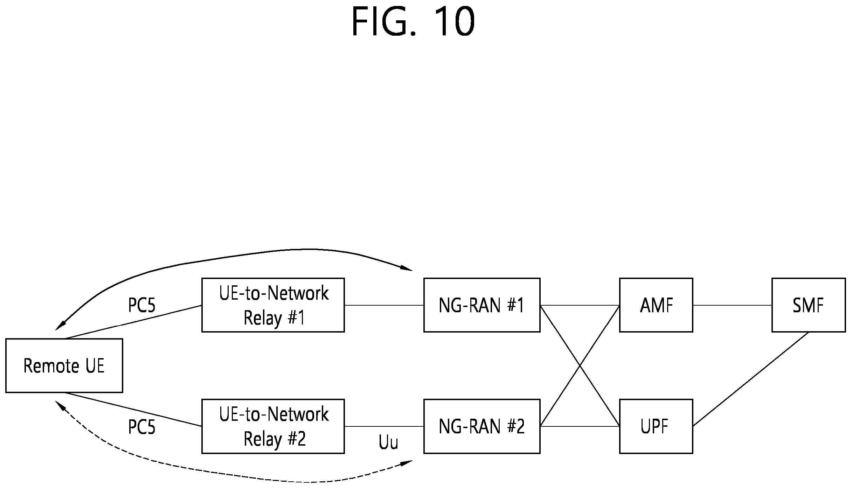

**FIG. 10** **shows a scenario where two different Indirect Paths are served to a UE through two different NG-RANs.**

In FIGs. 7 to 10, it is assumed that for all paths (Direct Path or Indirect Path), the connection/communication between the UE and the network on the path is 3GPP access (e.g., Uu interface). For example, in the case of the Direct Path, the connection/communication between the UE and the network is made through 3GPP access. And, in the case of the Indirect Path, the connection/communication between the UE-to-Network Relay and the network is made through 3GPP access.

FIGs. 7 to 10 show two paths, but this may be extended to three or more paths.

In FIGs. 7 to 10, multiple paths are shown to be served through the same PLMN. However, multiple paths may be served through different PLMNs.

A UE using multiple paths may be assumed to support both non-roaming and roaming cases.

There is a discussion on multi-path transmission using one direct network communication path (Direct Path) via UE-to-network relay and one indirect network communication path (Indirect Path) for reliability or data rate improvement.

Multi-path support may improve the stability and throughput of communication. Multiple paths may be utilized simultaneously. Switching between multiple paths may also be possible.

A terminal may be connected to the same gNB using one Direct Path and one Indirect Path (Layer-2 UE-to-Network relay or Indirect Path through another UE). Here, the solution for Layer-2 UE-to-Network relay may be reused for another UE.

In this specification, if there is no special mention of the Indirect Path, it is assumed to be through Layer-2 UE-to-Network Relay by default.

If the Remote UE uses multi-path (e.g., multiple paths), both paths must be able to connect to the same base station. For example, the base station to which the serving cell of the Remote UE related to the Direct Path belongs and the base station to which the serving cell of the Relay UE belongs must be the same. For example, in the case of FIG. 7, the terminal and the network may communicate through multi-path. Therefore, the Remote UE must consider this when selecting the Relay UE.

Since the gNB ID in the NCGI (NR Cell Global identifier) (e.g., Cell Identity) can have various lengths of 22 to 32 bits, if it does not have information about gNB-ID-Length separately, the Remote UE cannot determine whether the Relay belongs to the same base station with only the NCGI information. Therefore, a method is needed to efficiently support the Remote UE to search for the Relay UE belonging to the same base station by considering the flexible gNB-ID.

### <Disclosure of this specification>

In this specification, a method may be proposed to select a Relay capable of Multi-path transmission (e.g., when the Remote UE and the Relay UE belong to the same base station) by inferring the base station IDs to which the Remote UE and the Relay UE belong in two processes (e.g., Model A of FIG. 5 and Model B of FIG. 6) in which the Remote UE searches for the Relay UE.

In this specification, a method for supporting a UE using Multi-path may be composed of a combination of one or more of the following operations/configurations/steps.

In this specification, the method for supporting a UE using Multi-path assumes that in the case of Indirect Network Communication, a network connection service is received through a Layer-2 UE-to-Network Relay. However, the method proposed in this specification may also be extended to a case in which an Indirect Network Communication service is received through a Layer-3 UE-to-Network Relay.

In this specification, a path is assumed to be a path through an NG-RAN (which may be only gNB, or may be both gNB and ng-eNB). However, the proposed method may also be extended to paths via non-3GPP access.

In the case of an indirect path, the contents of this specification may be applied not only to one-hop cases (e.g., when a UE (or Remote UE) receives a service from a network via one UE-to-Network Relay) but also to multi-hop cases (e.g., when a UE (or Remote UE) receives a service from a network via multiple UE-to-Network Relays).

In this specification, a path may mean a communication path, a routing path, a connection path, etc.

In this specification, UE (User Equipment) and terminal are used interchangeably. In addition, UE-to-Network Relay, ProSe UE-to-Network Relay, Relay, Relay UE, UE-NW Relay, 5G ProSe UE-to-Network Relay, 5G ProSe UE-to-NW Relay, 5G ProSe UE-to-Network Relay UE, etc. are used interchangeably. In addition, Remote UE, 5G Remote UE, etc. are used interchangeably.

In this specification, each path is assumed to have a different section between the UE and the NG-RAN, and the subsequent section (e.g., the section between the NG-RAN and the 5G CN) is assumed to have no difference between the paths. However, the contents of this specification may be applied even if the paths between the NG-RAN and the 5G CN for each path (which are control plane related paths and/or data plane related paths) are different.

The method proposed in this specification may be interpreted as being performed or supported when the Remote UE uses the Relay UE for multi-path purposes/purposes. One or more of the following assumptions/prerequisites may be required for the method proposed in this specification.
- The Remote UE and the Relay UE may explicitly or implicitly recognize each other that the Relay UE supports the indirect path for the Remote UE for multi-path purposes/purposes through the Relay Discovery operation and/or the PC5 unicast link formation/modification operation and/or the message exchange with the network.
- The base station may explicitly or implicitly recognize that the Remote UE uses the indirect path for multi-path purposes/purposes.

For Layer-2 UE-to-Network Relay-related operations and procedures, TS 23.304 V17.3.0, TS 38.300 V17.0.0, TS 38.331 V17.0.0 may be basically referred.

In this specification, the expressions 'a cell belongs to a base station' and 'a base station manages a cell' may be interpreted as having the same meaning. A base station may manage multiple cells.

Model A of FIG. 5 and Model B of FIG. 6 are described separately below.

### I. Model A

Referring to FIG. 5, it is described below in comparison with the contents described above in FIG. 5.

Step 1. The UE-to-Network Relay Discovery Announcement message and/or the UE-to-Network Relay Discovery Additional Information message transmitted by the relay UE may additionally include one or more of the following information.

### i) Base station ID of the cell (or serving cell) to which the relay UE belongs:

The base station may transmit system information to the relay UE. The relay UE may include the ID of the base station to which the serving cell of the relay UE belongs in the RRC container based on the received system information. The relay UE may include the RRC container including the ID of the base station to which the serving cell of the relay UE belongs in the UE-to-Network Relay Discovery Announcement message and/or the UE-to-Network Relay Discovery Additional Information message.

The relay UE may include the base station ID (the ID of the base station to which the serving cell of the relay UE belongs) as a separate parameter in the UE-to-Network Relay Discovery Announcement message and/or the UE-to-Network Relay Discovery Additional Information message and transmit it to the remote UE.

### ii) Base station ID length of the cell (or serving cell) to which the relay UE belongs (gNB-ID-Length):

The base station may transmit system information to the relay UE. The relay UE may include the length of the ID of the base station to which the serving cell of the relay UE belongs in the RRC container based on the received system information. The relay UE may include the RRC container including the length of the ID of the base station to which the serving cell of the relay UE belongs in the UE-to-Network Relay Discovery Announcement message and/or the UE-to-Network Relay Discovery Additional Information message.

The relay UE may include the base station ID length (the ID length of the base station to which the relay UE's serving cell belongs) as a separate parameter in the UE-to-Network Relay Discovery Announcement message and/or the UE-to-Network Relay Discovery Additional Information message and transmit it to the remote UE.

The base station ID length (the ID length of the base station to which the relay UE's serving cell belongs) may be provisioned/configured in the relay UE. For example, the base station or the PLMN may include the gNB-ID-Length and/or the gNB-ID in SIB1 and transmit it to the relay UE (e.g., in PLMN-IdentityInfoList or CellAccessRelatedInfo). The gNB-ID-Length and/or the gNB-ID may be included because the network supports multi-path operation.

The gNB-ID-Length used by each PLMN capable of performing the UE-to-Network Relay operation may be configured/provisioned to the UE (remote UE and/or relay UE). Then, the UE (Remote UE and/or Relay UE) may extract the Base Station ID from the Cell Identity. Here, the PLMNs may correspond to "PLMNs in which the UE is authorized to relay traffic for 5G ProSe Layer-3 and/or Layer-2 Remote UEs" in the case of Relay UE, and "For 5G ProSe Layer-2 Remote UE, indicates the PLMNs in which the UE is authorized to use a 5G ProSe Layer-2 UE-to-Network Relay" in the case of Remote UE (see clause 5.1.4.1 of TS 23.304 V17.3.0). This may be applied throughout this specification.

The Base Station ID length used in a PLMN may vary. In this case, the Base Station ID length (gNB-ID-Length) value set/provisioned by the PLMN may represent a default value. Then, the base station may include gNB-ID-Length in SIB1 only if the configured/provisioned base station ID length is different from the default value.

The base station may provide the relay UE with the base station ID length (gNB-ID-Length) value. Then, the relay UE may use the received base station ID length (gNB-ID-Length) value with priority over the configured value if there is already a configured value.

The base station may provide the remote UE with the base station ID length (gNB-ID-Length) value. Then, the remote UE may use the received base station ID length (gNB-ID-Length) value with priority over the configured value if there is already a configured value.

The relay UE may provide the remote UE with the base station ID length (gNB-ID-Length) value. Then, the remote UE may use the received base station ID length (gNB-ID-Length) value with priority over the configured value if there is already a configured value.

Since the Relay UE supports the multi-path function, the above-mentioned i) and ii) information may be included in the UE-to-Network Relay Discovery Announcement message and/or the UE-to-Network Relay Discovery Additional Information message.

When the Remote UE receives the above-mentioned discovery message (UE-to-Network Relay Discovery Announcement message and/or UE-to-Network Relay Discovery Additional Information message) from the Relay UE(s), the Remote UE may check whether the base station to which the cell (or serving cell) to which it belongs or the base station serving its Direct Path is the same as the base station of the Relay UE. In order for the Remote UE to check whether the base stations are the same, the Remote UE may determine its own base station ID and the base station ID of the discovered Relay UE.

The Remote UE may use one or more of the following methods to determine its own base station ID. In this case, it is assumed that the cell of the Remote UE and the cell of the Relay UE are in the same PLMN. For example, only when the PLMN of the Remote UE's cell and the PLMN of the Relay UE's cell are the same, the Remote UE checks whether the base station of the Remote UE and the base station of the Relay UE are the same.
- The remote UE may obtain the base station ID from the base station (the base station to which the serving cell of the remote UE belongs).
- The remote UE may obtain the NCGI (e.g., Cell Identity) and gNB-ID-Length related to the serving cell of the remote UE from the base station (the base station to which the serving cell of the remote UE belongs). The remote UE may determine/extract the base station ID from the NCGI.
- The remote UE may obtain the NCGI from the base station. The gNB-ID-Length used in the corresponding PLMN may be provisioned/configured to the remote UE. The remote UE may determine/extract the base station ID from the NCGI using the provisioned/configured gNB-ID-Length.

The remote UE may use one or more of the following methods to determine the base station ID of the discovered Relay UE.
- The base station ID may be included in the discovery message received from the Relay UE.
- The discovery message received from the Relay UE may include NCGI and gNB-ID-Length. The Remote UE may determine/extract the base station ID from the NCGI using NCGI and gNB-ID-Length.
- The discovery message received from the Relay UE may include NCGI. The gNB-ID-Length of the corresponding PLMN may be provisioned/configured to the remote UE. The Remote UE may determine/extract the base station ID from the NCGI using NCGI and gNB-ID-Length.

The method for determining the base station ID of the Remote UE and the method for determining the base station ID of the Relay UE may be different from each other. Also, even if the remote UE cannot determine the actual base station ID of the Remote UE or Relay UE by the above-mentioned method (e.g., when the base station ID is not included and the gNB-ID-Length is unknown), the remote UE may determine the same base station by comparing only the NCGI of the Remote UE and the NCGI of the Relay UE, if i) all 32 bits of the left most bit of NCGI are the same (e.g., all 32 bits from the left of the NCGI are the same) or ii) the NCGI itself is the same. Or, even if the actual gNB-ID-Length is unknown, if all bits randomly determined by the remote UE among the left most bits of NCGI (e.g., one of the values of bits 22 to 32, which can be determined by the terminal implementation, for example) are the same, the remote UE may determine the same base station.

Through this process, the remote UE may select a relay UE having the same base station as the base station of the remote UE. Or, the remote UE may include a relay UE having the same base station as the base station of the remote UE in the candidate relay UEs.

The remote UE may establish a PC5 connection with the selected relay UE.

Then, the remote UE may communicate with the base station using Multi-Path. The Multi-Path may include i) an Indirect Path between the remote UE and the base station through the PC5 connection (via relay of the relay UE) and ii) a Direct Path between the remote UE and the base station without relay of the relay UE.

### II. Model B

This will be described with reference to FIG. 6. It will be described later in comparison with the contents described above in FIG. 6.

Step 1. One or more of the following information may be additionally included in the UE-to-Network Relay Discovery Solicitation message sent by the remote UE.
- Base station ID of the cell (or serving cell) to which the remote UE belongs
- NCGI of the cell (or serving cell) to which the remote UE belongs
- Base station ID length to which the remote UE belongs (gNB-ID-Length): In the case of the base station ID length, it may be provisioned/configured in the remote UE. In this regard, the contents of step 1 of the above-mentioned I (Model A) section may be applied.
- Information indicating that the Relay is used for multi-path purposes/purposes
- Information indicating that it is wanted to discover Relays that belong to the same base station.

Step 2. If the UE-to-Network Relay Discovery Solicitation message received by the Relay UE includes additional information described in step 1 above, the Relay UE may check whether the base station of the cell (or serving cell) to which it belongs and the base station of the Remote UE are the same.

The Relay UE may use one or more of the following methods to determine its base station ID:
- The Relay UE may obtain the base station ID from the base station (the base station to which the serving cell of the Relay UE belongs).
- The Relay UE may obtain the NCGI (e.g., Cell Identity) and gNB-ID-Length from the base station (the base station to which the serving cell of the Relay UE belongs). The Relay UE may determine/extract the base station ID from the NCGI.
- The Relay UE may obtain the NCGI from the base station. The gNB-ID-Length used in the corresponding PLMN may be provisioned/configured in the Relay UE. The Relay UE may determine/extract the base station ID from the NCGI using the provisioned/configured gNB-ID-Length.

The Relay UE may use one of the following methods to determine the base station ID of the Remote UE:
- The base station ID may be included in the discovery request message received from the Remote UE.
- The NCGI and gNB-ID-Length may be included in the discovery request message received from the Remote UE. The Relay UE may determine/extract the base station ID from the NCGI using the NCGI and gNB-ID-Length.
- The NCGI may be included in the discovery request message received from the Remote UE. The gNB-ID-Length of the corresponding PLMN may be provisioned/configured in the remote UE. The Relay UE may determine/extract the base station ID from the NCGI using the NCGI and gNB-ID-Length.

The method of determining the base station ID of the Remote UE and the method of determining the base station ID of the Relay UE may be different from each other. In addition, even if the remote UE cannot determine the actual base station ID of the Remote UE or the Relay UE by the above-mentioned method (e.g., when the base station ID is not included and gNB-ID-Length is not known), the remote UE may determine the same base station by comparing only the NCGI of the Remote UE and the NCGI of the Relay UE, if i) all 32 bits of the left most bit of NCGI are the same (e.g., all 32 bits from the left of the NCGI are the same) or ii) the NCGI itself is the same. Or, even if the actual gNB-ID-Length is not known, if all bits arbitrarily determined by the remote UE among the left most bits of NCGI (e.g., one of the values of bits 22 to 32, which can be determined by the terminal implementation, for example) are the same, the remote UE may determine the same base station.

If the Relay UE determines that the base station of the remote UE and the base station of the relay UE are the same, the Relay UE may transmit a UE-to-Network Relay Discovery Response message to the remote UE.

If the UE-to-Network Relay Discovery Solicitation message received by the Relay UE does not include the additional information described in step 1 (or if the additional information is included but does not include information that can determine the base station ID of the remote UE), the Relay UE may decide whether to transmit a UE-to-Network Relay Discovery Response message to the remote UE. If it decides to transmit the message, the UE-to-Network Relay Discovery Response message may include the additional information described in step 1 of section I (Model A) and transmit it to the remote UE.

When the Remote UE receives the UE-to-Network Relay Discovery Response message from the Relay UE(s), the Remote UE may check whether its base station and the base station of the Relay UE are the same. And only if they are the same, the remote UE may select a relay UE having the same base station as the base station of the remote UE. Or, the remote UE may include a relay UE having the same base station as the base station of the remote UE in the candidate relay UE. One or more of the following methods may be used for the above check:
- If the Remote UE includes information(that enables the Relay UE to determine/extract the base station ID of the Remote UE) among the additional information of step 1, the Remote UE may consider the base station of the Relay UE that sent the UE-to-Network Relay Discovery Response message to be the same as its own base station.
- If the Remote UE does not include the additional information of step 1 or does not include information that enables the Relay UE to determine/extract the base station ID of the Remote UE, the Remote UE may check whether the base stations are the same based on the UE-to-Network Relay Discovery Response message. For this, the method of determining the base station ID of the discovered Relay UE by the Remote UE described in Section I (Model A) may be applied.

The Remote UE may establish a PC5 connection with the selected relay UE.

Then, the remote UE may communicate with the base station using Multi-Path. The above Multi-Path may include i) an Indirect Path between a remote UE and a base station via the PC5 connection (via relay of the relay UE) and ii) a Direct Path between a remote UE and a base station without relay of the relay UE.

In the process of searching for a Relay UE for Multi-path transmission, the Remote UE may quickly determine a base station to which a candidate Relay UE is connected and determine whether the Relay UE and the Remote UE belong to the same base station. Through this, if the Relay UE and the Remote UE belong to different base stations (e.g., if support for Multi-path transmission via the Relay UE is not possible), the selection of the Relay UE may be prevented, thereby avoiding unnecessary PC5 generation between the Relay UE and the Remote UE in advance.

The above drawings may be executed individually or together with other drawings.

The drawings below are created to illustrate specific examples of the present specification. The names of specific devices or names of specific signals/messages/fields depicted in the drawings are presented as examples, and therefore the technical features of the present specification are not limited to the specific names used in the drawings below.

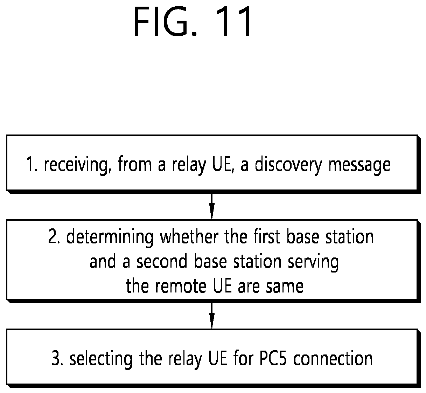

**FIG. 11** **shows the procedure of the remote UE according to disclosure of the present specification.**
1. The remote UE may receive, from a relay UE, a discovery message.
   The discovery message may include information on a first base station serving the relay UE.
2. The remote UE may determine whether the first base station and a second base station serving the remote UE are the same, based on the information on the first base station.
3. The remote UE may select the relay UE for PC5 (device-to-device communication) connection, based on the first base station and the second base station being the same.

The information on the first base station may include ID (identity) of the first base station.

The information on the first base station may include base station ID length information and NCGI (NR Cell Global identifier) for a serving cell of the relay UE.

The remote UE may determine ID of the first base station, based on the base station ID length(gNB-ID-Length) information and NCGI for the serving cell of the relay UE.

The step of determining whether the first base station and the second base station are the same: may be based on the determined ID of the first base station.

The remote UE may receive, from the second base station, ID of the second base station.

The step of determining whether the first base station and the second base station are the same: may be based on the determined ID of the second base station.

The remote UE may receive, from the second base station, base station ID length(gNB-ID-Length) information and NCGI for a serving cell of the remote UE.

The remote UE may determine ID of the second base station, based on the base station ID length(gNB-ID-Length) information and NCGI for the serving cell of the remote UE.

The step of determining whether the first base station and the second base station are the same: may be based on the determined ID of the second base station.

The remote UE may establish PC5 connection with the relay UE, based on the first base station and the second base station being the same.

The remote UE may perform communication with the first base station via multi-path, based on the first base station and the second base station being the same.

The multi-path may include i) indirect path between the remote UE and the first base station via the established PC5 connection and ii) direct path between the remote UE and the first base station without relaying of the relay UE.

The remote UE may transmit, to the relay UE, discovery request message.

The step of receiving the discovery message: may be based on the discovery request message.

The discovery request message may include ID of the first base station.

The discovery message may be based on the determination that a base station to which a serving cell of the relay UE belongs and a base station to which a serving cell of the remote UE belongs are the same, based on the ID of the first base station.

The discovery request message may include base station ID length(gNB-ID-Length) information and NCGI for a serving cell of the remote UE.

The discovery message may be based on the determination that a base station to which a serving cell of the relay UE belongs and a base station to which a serving cell of the remote UE belongs are the same, based on the base station ID length(gNB-ID-Length) information and the NCGI for a serving cell of the remote UE.

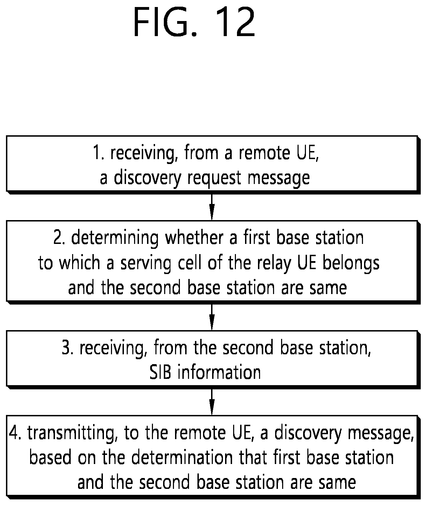

**FIG. 12** **shows the procedure of the relay UE according to disclosure of the present specification.**
1. The relay UE may receive, from a remote UE, a discovery request message.
   The discovery request message may include information on a second base station which a serving cell of the remote UE belongs.
2. The relay UE may determine whether a first base station to which a serving cell of the relay UE belongs and the second base station are the same, based on the information on the second base station.
3. The relay UE may transmit, to the remote UE, a discovery message, based on the determination that first base station and the second base station are the same.
   wherein the information on the second base station includes ID (identity) of the second base station.

The information on the second base station may include base station ID length information and NCGI (NR Cell Global identifier) for a serving cell of the remote UE.

The relay UE may determine ID of the second base station, based on the base station ID length(gNB-ID-Length) information and NCGI for the serving cell of the remote UE.

The step of determining whether the first base station and the second base station are the same: may be based on the determined ID of the second base station.

The relay UE may receive, from the first base station, ID of the first base station.

The step of determining whether the first base station and the second base station are the same: may be based on the determined ID of the first base station.

The relay UE may receive, from the first base station, base station ID length(gNB-ID-Length) information and NCGI for a serving cell of the relay UE.

The relay UE may determine ID of the first base station, based on the base station ID length(gNB-ID-Length) information and NCGI for the serving cell of the relay UE.

The step of determining whether the first base station and the second base station are the same: may be based on the determined ID of the first base station.

The relay UE may establish PC5 connection with the remote UE, based on the first base station and the second base station being the same.

The relay UE may relay communication between the remote UE and the first base station, based on the established PC5 connection.

Hereinafter, an apparatus for performing communication according to some embodiments of the present specification will be described.

For example, a target V-SMF may include a processor, a transceiver, and a memory.

For example, a processor may be configured to be operably coupled with a memory and a processor.

The processor may perform: receiving, from a relay UE, a discovery message; wherein the discovery message includes information on a first base station serving the relay UE, determining whether the first base station and a second base station serving the remote UE are the same, based on the information on the first base station; selecting the relay UE for PC5 (device-to-device communication) connection, based on the first base station and the second base station being the same.

Hereinafter, a processor for providing communication according to some embodiments of the present specification will be described.

The processor is configured to: receiving, from a relay UE, a discovery message; wherein the discovery message includes information on a first base station serving the relay UE, determining whether the first base station and a second base station serving the remote UE are the same, based on the information on the first base station; selecting the relay UE for PC5 (device-to-device communication) connection, based on the first base station and the second base station being the same.

Hereinafter, a non-volatile computer readable medium storing one or more instructions for providing multicast service in wireless communication according to some embodiments of the present specification will be described.

According to some embodiments of the present disclosure, the technical features of the present disclosure may be directly implemented as hardware, software executed by a processor, or a combination of the two. For example, in wireless communication, a method performed by a wireless device may be implemented in hardware, software, firmware, or any combination thereof. For example, the software may reside in RAM memory, flash memory, ROM memory, EPROM memory, EEPROM memory, registers, hard disk, removable disk, CD-ROM, or other storage medium.

Some examples of a storage medium are coupled to the processor such that the processor can read information from the storage medium. Alternatively, the storage medium may be integrated into the processor. The processor and storage medium may reside in the ASIC. For another example, a processor and a storage medium may reside as separate components.

Computer-readable media can include tangible and non-volatile computer-readable storage media.

For example, non-volatile computer-readable media may include random access memory (RAM), such as synchronization dynamic random access memory (SDRAM), read-only memory (ROM), or non-volatile random access memory (NVRAM). Read-only memory (EEPROM), flash memory, magnetic or optical data storage media, or other media that can be used to store instructions or data structures or Non-volatile computer readable media may also include combinations of the above.

Further, the methods described herein may be realized at least in part by computer-readable communication media that carry or carry code in the form of instructions or data structures and that can be accessed, read, and/or executed by a computer.

According to some embodiments of the present disclosure, a non-transitory computer-readable medium has one or more instructions stored thereon. The stored one or more instructions may be executed by a processor of the base station.

The stored one or more instructions cause the processors to: receiving, from a relay UE, a discovery message; wherein the discovery message includes information on a first base station serving the relay UE, determining whether the first base station and a second base station serving the remote UE are the same, based on the information on the first base station; selecting the relay UE for PC5 (device-to-device communication) connection, based on the first base station and the second base station being the same.

The present specification may have various effects.

For example, the remote UE can enable multi-path communication by selecting a relay UE belonging to the same base station by determining whether the base station serving the remote UE and the base station serving the relay UE are the same based on information received from the relay UE.

Effects that can be obtained through specific examples of the present specification are not limited to the effects listed above. For example, various technical effects that a person having ordinary skill in the related art can understand or derive from this specification may exist. Accordingly, the specific effects of the present specification are not limited to those explicitly described herein, and may include various effects that can be understood or derived from the technical characteristics of the present specification.

The claims described herein may be combined in various ways. For example, the technical features of the method claims of the present specification may be combined and implemented as an apparatus, and the technical features of the apparatus claims of the present specification may be combined and implemented as a method. In addition, the technical features of the method claim of the present specification and the technical features of the apparatus claim may be combined to be implemented as an apparatus, and the technical features of the method claim of the present specification and the technical features of the apparatus claim may be combined and implemented as a method. Other implementations are within the scope of the following claims.

## Claims

1. A method for performing communication, performed by a remote UE (User Equipment), comprising:
receiving, from a relay UE, a discovery message;
wherein the discovery message includes information on a first base station serving the relay UE,
determining whether the first base station and a second base station serving the remote UE are the same, based on the information on the first base station;
selecting the relay UE for PC5 (device-to-device communication) connection, based on the first base station and the second base station being the same.

2. The method of claim 1,
wherein the information on the first base station includes ID (identity) of the first base station.

3. The method of claim 1, further comprising:
wherein the information on the first base station includes base station ID length information and NCGI (NR Cell Global identifier) for a serving cell of the relay UE,
determining ID of the first base station, based on the base station ID length(gNB-ID-Length) information and NCGI for the serving cell of the relay UE,
wherein the step of determining whether the first base station and the second base station are the same: is based on the determined ID of the first base station.

4. The method of one of the claims 1 to 3, further comprising:
receiving, from the second base station, ID of the second base station,
wherein the step of determining whether the first base station and the second base station are the same: is based on the determined ID of the second base station.

5. The method of one of the claims 1 to 3, further comprising:
receiving, from the second base station, base station ID length(gNB-ID-Length) information and NCGI for a serving cell of the remote UE,
determining ID of the second base station, based on the base station ID length(gNB-ID-Length) information and NCGI for the serving cell of the remote UE,
wherein the step of determining whether the first base station and the second base station are the same: is based on the determined ID of the second base station.

6. The method of one of the claims 1 to 5, further comprising:
establishing PC5 connection with the relay UE, based on the first base station and the second base station being the same;
performing communication with the first base station via multi-path, based on the first base station and the second base station being the same,
wherein the multi-path includes i) indirect path between the remote UE and the first base station via the established PC5 connection and ii) direct path between the remote UE and the first base station without relaying of the relay UE.

7. The method of claim 2 or claim 3, further comprising:
transmitting, to the relay UE, a discovery request message,
wherein the step of receiving the discovery message: is based on the discovery request message.

8. The method of claim 7,
wherein the discovery request message includes ID of the first base station,
wherein the discovery message is based on the determination that a base station to which a serving cell of the relay UE belongs and a base station to which a serving cell of the remote UE belongs are the same, based on the ID of the first base station.

9. The method of claim 7,
wherein the discovery request message includes base station ID length(gNB-ID-Length) information and NCGI for a serving cell of the remote UE,
wherein the discovery message is based on the determination that a base station to which a serving cell of the relay UE belongs and a base station to which a serving cell of the remote UE belongs are the same, based on the base station ID length(gNB-ID-Length) information and the NCGI for a serving cell of the remote UE.

10. A remote UE (User Equipment), to perform communication, comprising:
a transceiver; and
a processor,
wherein the processor performs operation that is a method of one of the claims 1 to 9.

11. A method for performing communication, performed by a relay UE (User Equipment), comprising:
receiving, from a remote UE, a discovery request message;
wherein the discovery request message includes information on a second base station which a serving cell of the remote UE belongs,
determining whether a first base station to which a serving cell of the relay UE belongs and the second base station are the same, based on the information on the second base station;
transmitting, to the remote UE, a discovery message, based on the determination that first base station and the second base station are the same.

12. The method of claim 11,
wherein the information on the second base station includes ID (identity) of the second base station.

13. The method of claim 11, further comprising:
wherein the information on the second base station includes base station ID length information and NCGI (NR Cell Global identifier) for a serving cell of the remote UE,
determining ID of the second base station, based on the base station ID length(gNB-ID-Length) information and NCGI for the serving cell of the remote UE,
wherein the step of determining whether the first base station and the second base station are the same: is based on the determined ID of the second base station.

14. The method of one of the claims 11 to 13, further comprising:
receiving, from the first base station, ID of the first base station,
wherein the step of determining whether the first base station and the second base station are the same: is based on the determined ID of the first base station.

15. The method of one of the claims 11 to 13, further comprising:
receiving, from the first base station, base station ID length(gNB-ID-Length) information and NCGI for a serving cell of the relay UE,
determining ID of the first base station, based on the base station ID length(gNB-ID-Length) information and NCGI for the serving cell of the relay UE,
wherein the step of determining whether the first base station and the second base station are the same: is based on the determined ID of the first base station.

16. The method of one of the claims 11 to 15, further comprising:
establishing PC5 connection with the remote UE, based on the first base station and the second base station being the same;
relaying communication between the remote UE and the first base station, based on the established PC5 connection.

17. A relay UE (User Equipment), to perform communication, comprising:
a transceiver; and
a processor,
wherein the processor performs operation that is a method of one of the claims 11 to 16.

18. An apparatus in mobile communication, comprising:
at least one processor; and
at least one memory storing instructions and operably electrically connectable with the at least one processor,
wherein, based on the instructions being operated by the at least one processor, the instructions perform operation that is a method of one of the claims 1 to 9.

19. A non-volatile computer readable storage medium having recorded instructions,
wherein the instructions, based on being executed by one or more processors, cause the one or more processors to perform operation that is a method of one of the claims 1 to 9.
